# EUROPÄISCHE PATENTSCHRIFT

(11) **EP 3 022 078 B1**
(45) Veröffentlichungstag und Bekanntmachung des Hinweises auf die Patenterteilung: **13.11.2019**
(21) Anmeldenummer: 14731551.9
(22) Anmeldetag: 12.06.2014
(51) Int. Cl.: B60K 1/04, B60K 1/00, B60K 11/02, B60K 11/06, H01M 10/625, H01M 2/10, H01M 10/613, H01M 10/6556, H01M 10/6567

(54) **AUFNAHMEVORRICHTUNG ZUR AUFNAHME WENIGSTENS EINER ENERGIESPEICHERKOMPONENTE**
RECEIVING DEVICE FOR RECEIVING AT LEAST ONE ENERGY STORAGE COMPONENT
DISPOSITIF DE RÉCEPTION POUR RECEVOIR AU MOINS UN COMPOSANT DE STOCKAGE D'ÉNÉRGIE

(30) Priorität: 16.07.2013 DE 102013011894
(43) Veröffentlichungstag der Anmeldung: 25.05.2016
(73) Patentinhaber: Audi AG, 85045 Ingolstadt (DE)
(72) Erfinder: ENNING, Norbert, 85095 Denkendorf (DE); GUYOT, Bastian, 85051 Ingolstadt (DE)
(74) Vertreter: Lehle, Josef
(86) Internationale Anmeldenummer: PCT/EP2014/001600
(87) Internationale Veröffentlichungsnummer: WO 2015/007361

(56) Entgegenhaltungen:
- DE-A1-102008 034 885
- US-A1- 2002 012 833
- US-A1- 2009 197 154
- US-A1- 2012 312 614

## Beschreibung

Die Erfindung betrifft eine Aufnahmevorrichtung zur Aufnahme wenigstens einer Energiespeicherkomponente, umfassend wenigstens ein einen Aufnahmeraum zur Aufnahme der Energiespeicherkomponente zumindest abschnittsweise begrenzendes Aufnahmeteil.

Entsprechende Aufnahmevorrichtungen für elektrische Energiespeicher sind bekannt und dienen allgemein der Aufnahme respektive Lagerung von Energiespeicherkomponenten, wie beispielsweise Energiespeicherzellen oder mit diesen elektrisch zu verbindenden oder verbundenen elektrischen oder elektronischen Komponenten, wie z. B. Lade- oder Steuerelektroniken. Hierfür weisen entsprechende Aufnahmevorrichtungen typischerweise ein einen Aufnahmeraum zur Aufnahme der Energiespeicherkomponenten begrenzendes Aufnahmeteil auf.

Bekanntermaßen entsteht im Betrieb entsprechender Energiespeicherkomponenten Wärme, welche aus den Energiespeicherkomponenten sowie der diese aufnehmenden Aufnahmevorrichtung abgeführt werden muss, um ein Überhitzen und eine daraus gegebenenfalls folgende Schädigung der Energiespeicherkomponenten, der Aufnahmevorrichtung sowie gegebenenfalls weiterer mit dieser in einer konkreten Anwendung verbauter Komponenten zu verhindern.

Die Verwendung separater, an entsprechende Aufnahmevorrichtungen anzuschließender Kühleinrichtungen bietet die Möglichkeit einer Kühlung bzw. Temperierung entsprechender Energiespeicherkomponenten respektive Aufnahmevorrichtungen. Nachteilhaft sind derartige Kühleinrichtungen jedoch insbesondere im Hinblick auf den von diesen beanspruchten Bauraum.

Aufnahmevorrichtungen zur Aufnahme wenigstens einer Energiespeicherkomponente sind z.B. aus der US 2012/312614 A1 und US 2009/197154 A1 bekannt.

Der Erfindung liegt damit die Aufgabe zugrunde, eine demgegenüber verbesserte Aufnahmevorrichtung zur Aufnahme wenigstens einer Energiespeicherkomponente anzugeben.

Das Problem wird erfindungsgemäß durch eine Aufnahmevorrichtung mit den Merkmalen des Anspruchs 1 gelöst.

Die erfindungsgemäße Aufnahmevorrichtung zeichnet sich einerseits durch ein besonders gestaltetes bzw. konstruiertes Aufnahmeteil aus. Das Aufnahmeteil weist mehrere Aufnahmeabteile auf, deren Abmessungen zweckmäßig jeweils an eine oder mehrere in diese einzusetzende Energiespeicherkomponente(n) angepasst sind. Die jeweiligen Energiespeicherkomponente lassen sich demnach passgenau, gegebenenfalls formschlüssig, in den jeweiligen für diese vorgesehenen Aufnahmeabteilen einsetzen. Insgesamt sind die in dem Aufnahmeteil gebildeten Aufnahmeabteile sonach in Anzahl, Abmessungen und Form an die Anzahl, Abmessungen und Formen der jeweiligen in diese einzusetzenden Energiespeicherkomponenten angepasst.

Die jeweiligen Aufnahmeabteile sind typischerweise durch, insbesondere lotrecht zueinander verlaufende, Traversen bzw. Stege gebildet. Die jeweiligen Aufnahmeabteile können in vertikaler Richtung typischerweise beidseits offen sein, so dass es sich bei den Aufnahmeabteilen typischerweise um vertikale Durchbrechungen bzw. Öffnungen des Aufnahmeteils handelt. Denkbar ist es jedoch auch, dass die oder bestimmte Aufnahmeabteile in vertikaler Richtung nicht vollständig durchbrochen sind, sondern vielmehr in Form von Ausnehmungen oder Vertiefungen vorliegen. Die Bodenfläche dieser Ausnehmungen kann mit der Bodenfläche des Aufnahmeteils, worunter diejenige Fläche des Aufnahmeteils zu verstehen ist, mit der dieses auf einem horizontalen Untergrund aufliegt, fluchten. Denkbar ist es jedoch auch, dass die Bodenfläche dieser Ausnehmungen im Vergleich zu der Bodenfläche des Aufnahmeteils höher liegt.

Bei dem der erfindungsgemäßen Aufnahmevorrichtung zugehörigen Aufnahmeteil handelt es sich sonach typischerweise um ein rahmenartiges Bauteil. Das Aufnahmeteil bildet eine Halte- und/oder Tragstruktur für die in diesem aufzunehmenden Energiespeicherkomponenten, bei welchen es sich typischerweise um Energiespeicherzellen und mit den Energiespeicherzellen verbundene elektrische und/oder elektronische Bauteile, wie z. B. eine den Lade- und Entladebetrieb der Energiespeicherzellen steuernde Lade- oder Steuereinrichtungen, handelt.

Erfindungsgemäß ist der Aufnahmevorrichtung ferner eine Kühleinrichtung zugehörig, welche unmittelbar angrenzend an das Aufnahmeteil angeordnet ist. Die Kühleinrichtung kontaktiert das Aufnahmeteil sonach abschnittsweise unmittelbar. Die Kontaktbereiche zwischen der Kühleinrichtung und dem Aufnahmeteil ergeben sich aus der konkreten Anordnung der Kühleinrichtung an dem Aufnahmeteil. Es ist daher möglich, dass die in dem Aufnahmeteil aufgenommenen Energiespeicherkomponenten wie selbstverständlich auch das Aufnahmeteil selbst über die Kühleinrichtung kühlbar sind bzw. gekühlt werden können. Die beschriebene unmittelbare Kontaktierung ermöglicht einen guten Wärmeaustausch und somit eine effiziente Kühlung der in dem Aufnahmeteil aufgenommenen Energiespeicherkomponenten wie auch des Aufnahmeteils. In Ausnahmefällen können zwischen dem Aufnahmeteil und der Kühleinrichtung zumindest abschnittsweise thermisch leitfähige Einrichtungen, wie insbesondere thermische leitfähige Pasten, Kleber oder dergleichen, angeordnet sein.

Insbesondere ist es möglich, eine den Lade- und Entladebetrieb der Energiespeicherzellen steuernde Lade- oder Steuereinrichtungen, kurz ein Ladegerät, in ein entsprechendes Aufnahmeabteil und somit das Aufnahmeteil zu integrieren. Das aus dem Stand der Technik bekannte Prinzip einer räumlich getrennten Anordnung einer entsprechenden Steuereinrichtung ist damit überkommen. Sonach sind auch separate Kühleinrichtungen für die Kühlung entsprechender Steuereinrichtungen nicht mehr erforderlich, da die Kühlung über die in das Aufnahmeteil integrierte Kühleinrichtung erfolgen kann.

Um eine hohe mechanische Stabilität des Aufnahmeteils und somit der gesamten Aufnahmevorrichtung zu gewährleisten, ist es zweckmäßig, wenn das Aufnahmeteil ein metallisches Druckgussteil ist. Entsprechend lässt sich das weitere Aufnahmeteil bevorzugt aus Materialien wie Aluminium, Magnesium oder Titan bilden. Ein weiterer Vorteil einer derartigen Ausführung des Aufnahmeteils liegt darin, dass durch die hohe thermische Leitfähigkeit des Aufnahmeteils ein hohes Maß an Wärmeübertragung von den in diesem aufgenommene Energiespeicherkomponenten auf das Aufnahmeteil und weiter auf die mit diesem verbundenen Kühleinrichtung möglich ist, was die Effizienz der Kühlung weiter verbessert. Selbstverständlich ist es grundsätzlich auch denkbar, dass weitere Aufnahmeteil nicht als metallisches Druckgussteil, sondern beispielsweise als Bauteil aus Keramik oder Kunststoff auszuführen.

Erfindungsgemäß bildet das Aufnahmeteil eine Seitenfläche der Aufnahmevorrichtung, und es ist ein eine Bodenfläche der Aufnahmevorrichtung bildendes weiteres Aufnahmeteil vorgesehen, wobei die Kühleinrichtung durch eine in der Oberfläche des weiteren Aufnahmeteils gebildete, wenigstens einen Kühlmittelkanal umfassende Kühlmittelkanalstruktur gebildet ist. Die beiden Aufnahmeteile sind typischerweise miteinander verbunden, wobei das die Seitenfläche der Aufnahmevorrichtung bildende Aufnahmeteil typischerweise auf das die Bodenfläche der Aufnahmevorrichtung bildende weitere Aufnahmeteil, welches sonach auch als Bodenteil bezeichnet werden kann, aufgesetzt ist. Die Verbindung der beiden Aufnahmeteile ergibt sich insbesondere auch daraus, dass in das die Kühleinrichtung in das weitere Aufnahmeteil integriert bzw. durch dieses gebildet ist. Die Kühleinrichtung liegt hier in Form einer in der Oberfläche des weiteren Aufnahmeteils gebildeten, typischerweise mehrere Kühlkanäle umfassenden, Kühlmittelkanalstruktur vor.

Das weitere Aufnahmeteil ist sonach derart konzipiert bzw. gestaltet, dass in dessen Oberfläche eine einen oder mehrere Kühlmittelkanäle umfassende Kühlmittelkanalstruktur ausgebildet ist. Die sonach in das weitere Aufnahmeteil integrierte bzw. durch das weitere Aufnahmeteil selbst gebildete Kühlmittelkanalstruktur bietet die Möglichkeit, ein Kühlmittel, d. h. z. B. ein flüssiges oder gasförmiges Fluid, in konzertierter Weise entlang der Oberfläche des weiteren Aufnahmeteils strömen bzw. zirkulieren zu lassen. Der bzw. die von der Kühlmittelkanalstruktur umfasste Kühlmittelkanal bzw. die Kühlmittelkanäle ist bzw. sind typischerweise derart angeordnet, dass das Kühlmittel kreislaufartig entlang der Oberfläche des weiteren Aufnahmeteils strömen bzw. zirkulieren kann. Das entlang der Oberfläche des weiteren Aufnahmeteils strömende bzw. zirkulierende Kühlmittel kann sonach möglichst nah an eine innerhalb des Aufnahmeraums der Aufnahmevorrichtung, d. h. insbesondere innerhalb entsprechender Aufnahmeabteile, angeordnete, zu kühlende(n) Energiespeicherkomponente(n) gebracht werden, so dass ein guter Wärmeaustausch zwischen dem Kühlmittel und der zu kühlenden Energiespeicherkomponente(n) und somit eine hohe Kühleffizienz ermöglicht ist.

Die von der Kühlmittelkanalstruktur umfassten respektive durch die Kühlmittelkanalstruktur begrenzten Kühlmittelkanäle können, je nach Art des durch diese strömenden bzw. zirkulierenden Kühlmittels, d. h. insbesondere, ob es sich um ein gasförmiges oder flüssiges Kühlmittel handelt, offen oder geschlossen sein. Bei einer offenen Ausführung kann das Kühlmittel aus der Kühlmittelkanalstruktur in den Aufnahmeraum treten und so unmittelbar an die zu kühlenden Energiespeicherkomponenten gelangen. Die offene Ausführung der Kühlmittelkanalstruktur respektive der Kühlmittelkanäle wird bevorzugt bei Verwendung eines gasförmigen Kühlmittels vorgesehen. Bei dem gasförmigen Kühlmittel kann es sich beispielsweise um entsprechend temperiertes Kohlendioxid handeln. Dagegen ist das Kühlmittel bei einer geschlossenen Ausführung räumlich von den zu kühlenden Energiespeicherkomponenten getrennt, so dass es nicht unmittelbar an die zu kühlenden Energiespeicherkomponenten gelangen kann. Die geschlossene Ausführung der Kühlmittelkanalstruktur respektive der Kühlmittelkanäle wird bevorzugt bei Verwendung eines flüssigen Kühlmittels vorgesehen. Bei dem flüssigen Kühlmittel kann es sich beispielsweise um entsprechend temperiertes Flüssigkeit, wie z. B. Wasser, eine wässrige Lösung oder Öl, handeln.

Grundsätzlich ist es denkbar, dass die gesamte Oberfläche des weiteren Aufnahmeteils mit einer entsprechenden Kühlmittelkanalstruktur versehen ist. Denkbar ist es jedoch auch, dass nur bestimmte Bereiche der Oberfläche des weiteren Aufnahmeteils mit einer entsprechenden Kühlmittelkanalstruktur versehen sind. Die Kühlmittelkanalstruktur kann auch in mehrere separate, jeweils unterschiedliche Bereiche der Oberfläche des weiteren Aufnahmeteils abdeckende Kühlmittelkanäle aufgeteilt sein. Erfindungsgemäß kommunizieren die der Kühlmittelkanalstruktur zugehörigen Kühlmittelkanäle mittelbar oder unmittelbar, d. h. insbesondere über mit diesen kommunizierende weitere Kühlmittelkanäle, mit einem Kühlmitteleinlass und einem Kühlmittelauslass. Dabei ist es insbesondere zweckmäßig, wenn die Anordnung der Kühlmittelkanäle derart ist, dass die Strömung des durch diese strömenden Kühlmittels zumindest abschnittsweise gegenläufig ist. Für alle Varianten gilt, dass die Kühlmittelkanalstruktur respektive die dieser zugehörigen Kühlmittelkanäle vorzugsweise mäanderartig verlaufen.

Bevorzugt kommuniziert das weitere Aufnahmeteil sonach mit zumindest einem Kühlmitteleinlass und zumindest einem Kühlmittelauslass, über welche ein Kühlmittel in die Kühlmittelkanalstruktur eingebracht bzw., insbesondere nach Durchlaufen der Kühlmittelkanalstruktur, aus der Kühlmittelkanalstruktur entfernt werden kann.

Die Anordnung des Kühlmitteleinlasses, des Kühlmittelauslasses wie auch der mit diesen kommunizierenden Kühlmittelkanalstruktur ist zweckmäßig derart gewählt, dass sich für sämtliche zu kühlenden, in das Aufnahmeteil aufzunehmenden oder aufgenommenen Energiespeicherkomponenten eine möglichst homogene Kühlung ergibt. Dies kann beispielsweise dadurch erreicht werden, dass der Kühlmitteleinlass und der Kühlmittelauslass an einer mittigen Position relativ zu einer Längsachse des weiteren Aufnahmeteils angeordnet sind. In dieser Anordnung tritt Kühlmittel mit einer niedrigen Temperatur mittig in die Kühlmittelkanalstruktur ein und nach Durchlaufen der Kühlmittelkanalstruktur erwärmtes Kühlmittel mit einer im Vergleich hohen Temperatur tritt mittig aus der Kühlmittelkanalstruktur aus. Derart ist es möglich, die vergleichsweise geringe Kühlwirkung des nach Durchlaufen der Kühlmittelkanalstruktur erwärmten Kühlmittels auszugleichen, da dieses in seinem Austrittsbereich zumindest abschnittsweise benachbart, insbesondere parallel, zu dem Eintrittsbereich des noch nicht erwärmten Kühlmittels verläuft.

Die Ausbildung der Kühlmittelkanalstruktur in der Oberfläche des weiteren Aufnahmeteils kann über unterschiedliche technische Ansätze erfolgt sein. Einerseits kann die Kühlmittelkanalstruktur im Rahmen der Formgebung des weiteren Aufnahmeteils, d. h. insbesondere eines formgebenden Schritts während der Herstellung des Aufnahmeteils, erfolgt sein. Diese Variante betrifft insbesondere weitere Aufnahmeteile, welche über Gießverfahren, wie z. B. Spritzgießverfahren, d. h. aus gießfähigen, insbesondere spritzgießfähigen, Materialien hergestellt sind. Denkbar ist in diesem Zusammenhang die Ausbildung des weiteren Aufnahmeteils aus einem spritzgießfähigen thermoplastischen Kunststoffmaterial, wie z. B. ABS, PE, PP, oder einem gießfähigen duroplastischen Kunststoffmaterial. In beiden Fällen ist es denkbar, dass das Kunststoffmaterial mit Verstärkungsfasern, wie z. B. Aramid-, Glas- oder Kohlefasern, gefüllt ist. Das weitere Aufnahmeteil kann alternativ auch aus einem (spritz)gießfähigen Metall, wie z. B. Aluminium oder Magnesium, gebildet sein.

Andererseits kann die Ausbildung der Kühlmittelkanalstruktur in der Oberfläche des Aufnahmeteils im Rahmen einer mechanischen Bearbeitung bzw. eines Materialabtrags, d. h. z. B. durch Spanen, allgemein spanabhebende Verfahren, Erodieren etc., erfolgt sein. Die Ausbildung der Kühlmittelkanalstruktur kann sich sonach an die eigentliche Herstellung des weiteren Aufnahmeteils angeschlossen haben. Die Materialwahl für das weitere Aufnahmeteil schränkt sich in dieser Ausführungsform nur dadurch ein, dass das für die Ausbildung des weiteren Aufnahmeteils gewählte Material sich entsprechend bearbeiten lassen sollte. Das weitere Aufnahmeteil kann auch in dieser Ausführungsform gleichermaßen aus einem Kunststoffmaterial oder einem Metall gebildet sein.

Die geometrische Gestalt, d. h. insbesondere der Querschnitt, der Kühlmittelkanäle ist grundsätzlich frei wählbar. Beispielsweise können die Kühlmittelkanäle einen halbkreisförmigen, V- oder U-förmigen Querschnitt aufweisen. Der Querschnitt der Kühlmittelkanäle kann sich bezogen auf deren Erstreckungslänge abschnittsweise ändern bzw. unterschiedlich sein.

Die geometrische Gestalt des weiteren Aufnahmeteils ist grundsätzlich frei wählbar respektive im Hinblick auf eine für die gesamte Aufnahmevorrichtung vorzusehende Anwendung bzw. Einbausituation, d. h. z. B. eine Einbausituation in einem Kraftfahrzeug, zu wählen. Zweckmäßig ist jedoch eine Ausführung des weiteren Aufnahmeteils mit einer trog- oder wannenartigen Gestalt vorgesehen. Das weitere Aufnahmeteil weist sonach bevorzugt eine Grundfläche mit davon winklig, insbesondere rechtwinklig, abragenden Rändern auf. Die Form der Grundfläche ist wiederum frei wählbar, d. h. insbesondere im Hinblick auf eine für die gesamte Aufnahmevorrichtung vorzusehende Anwendung bzw. Einbausituation zu wählen. Die Grundfläche sowie insbesondere auch die Höhe der von der Grundfläche abragenden Ränder definieren das Volumen des von dem weiteren Aufnahmeteil begrenzten Aufnahmeraums. Das weitere Aufnahmeteil stellt daher ebenso einen Teil des für die Energiespeicherkomponente(n) seitens der Aufnahmevorrichtung vorgesehenen Aufnahmeraums dar. Die Höhe der Ränder des weiteren Aufnahmeteils kann als Maß dafür aufgefasst werden, zu welchem Anteil das weiteren Aufnahmeteil den Aufnahmeraum begrenzt. Insgesamt wird der Aufnahmeraum der erfindungsgemäßen Aufnahmevorrichtung sonach durch die jeweiligen Aufnahmeraumanteile der der Aufnahmevorrichtung zugehörigen Aufnahmeteile definiert.

Wie erwähnt kann die Kühlmittelkanalstruktur respektive die dieser zugehörigen Kühlmittelkanäle geschlossen ausgeführt sein. Dies ist erfindungsgemäß dadurch realisiert, dass die Kühlmittelkanalstruktur durch zumindest ein plattenförmiges Abdeckelement abgedeckt ist. Das plattenförmige Abdeckelement dichtet bzw. schließt die Kühlmittelkanäle sonach bezogen auf die Oberfläche des weiteren Aufnahmeteils nach oben ab. Die Abmessungen und die Form des plattenförmigen Abdeckelements sind typischerweise an die Abmessungen und die Form des weiteren Aufnahmeteils, d. h. insbesondere an die Abmessungen und die Form der Grundfläche des weiteren Aufnahmeteils, angepasst, so dass das Abdeckelement in das weitere Aufnahmeteil derart einsetzbar ist, dass es zumindest einen Teil der Kühlmittelkanalstruktur überdeckt. Insbesondere wird dabei der Bereich der Kühlmittelkanalstruktur überdeckt, in welchem im Weiteren die Energiespeicherkomponenten anzuordnen bzw. angeordnet sind. Bei dem plattenförmigen Abdeckelement kann es sich beispielsweise um eine ebene Platte aus einem Kunststoffmaterial oder Metall handeln. Die Ausführung aus Metall ist deshalb bevorzugt, da Metall im Vergleich eine bessere thermische Leitfähigkeit aufweist, was den Wärmeübergang von den zu kühlenden Energiespeicherkomponenten auf das Abdeckelement und das innerhalb der Kühlmittelkanalstruktur strömende Kühlmittel erleichtert.

Der wenigstens eine Kühlmitteleinlass und der wenigstens eine Kühlmittelauslass sind typischerweise in dem plattenförmigen Abdeckelement ausgebildet. Der wenigstens eine Kühlmitteleinlass wie auch der wenigstens eine Kühlmittelauslass sind beispielsweise als, insbesondere integral mit dem plattenförmigen Abdeckelement ausgeführte, Anschlussstutzen gebildet.

Das plattenförmige Abdeckelement ist mit der Oberfläche des weiteren Aufnahmeteils zweckmäßig über zumindest einen Verbindungspunkt verbunden. Selbstverständlich ist auch eine teil- oder vollflächige Verbindung des Abdeckelements mit der Oberfläche des weiteren Aufnahmeteils möglich. Die Verbindung, d. h. insbesondere die Ausbildung der Verbindungspunkte, kann z. B. über Kleben oder Schweißen erfolgen. Denkbar sind auch mechanische Verbindungsarten, wie z. B. Bördeln, Nieten, Schrauben, um eine Verbindung zwischen dem Abdeckelement und der Oberfläche des weiteren Aufnahmeteils herzustellen.

Erfindungsgemäß ist vorgesehen, dass der Kühlmitteleinlass und der Kühlmittelauslass in einem separaten, von dem den Aufnahmeraum begrenzenden Bereichen räumlich getrennt angeordneten Bereich des plattenförmigen Abdeckelements angeordnet sind. Hierdurch kann sichergestellt werden, dass der Kühlmitteleinlass und der Kühlmittelauslass in einem Bereich des plattenförmigen Abdeckelements angeordnet sind, welcher regelmäßig frei von den den Aufnahmeraum begrenzenden Bereichen des weiteren Aufnahmeteils entfernt liegt, so dass dieser auch bei einem Verschluss des Aufnahmeraums über ein Deckel- oder Verschlusselement frei liegt und daher gut zugänglich ist.

Wie erwähnt kann das weitere Aufnahmeteil z. B. aus einem Kunststoffmaterial oder Metall gebildet sein. Beide Materialien bzw. Materialgruppen zeichnen sich durch spezifische Vorteile aus. So bietet ein Kunststoffmaterial z. B. eine vergleichsweise hohe thermische wie auch elektrische Isolierung. Dagegen bietet ein Metall z. B. einen vergleichsweise hohe mechanische Stabilität. Die tatsächliche Materialwahl ist daher in Abhängigkeit der an die Aufnahmevorrichtung tatsächlich gestellten Anforderungen vorzunehmen. Hierbei ist insbesondere auch die Verbausituation der Aufnahmevorrichtung in einem größeren baulichen Zusammenhang, wie z. B. einem Kraftfahrzeug, zu beachten.

Um den durch das Aufnahmeteil sowie gegebenenfalls das weitere Aufnahmeteil begrenzten Aufnahmeraum vollständig abzuschließen bzw. abzudichten, kann ein Deckel- oder Verschlussteil, über welches der Aufnahmeraum zumindest nach einer offenen Seite hin verschließbar ist, vorgesehen sein. Durch die korrekte Anordnung bzw. Verbindung des Verschlussteils mit dem oder den Aufnahmeteilen ist sonach eine Abdichtung sowie ein Schutz der in dem Aufnahmeraum aufgenommenen Energiespeicherkomponenten vor mechanischen wie auch korrosiven Einflüssen gegeben.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1, 2: eine Aufnahmevorrichtung gemäß einer beispielhaften Ausführungsform der Erfindung;
- Fig. 3: eine Einzelansicht des in den Fig. 1, 2 gezeigten Aufnahmeteils;
- Fig. 4, 5: je ein einer Aufnahmevorrichtung zugehöriges weiteres Aufnahmeteil gemäß einer beispielhaften Ausführungsform der Erfindung;
- Fig. 6: eine Aufsicht auf das in Fig. 4 gezeigte weitere Aufnahmeteil;
- Fig. 7: einen Schnitt entlang der in Fig. 6 gezeigten Schnittlinien VI - VI; und
- Fig. 8: eine Aufnahmevorrichtung gemäß einer weiteren beispielhaften Ausführungsform der Erfindung.

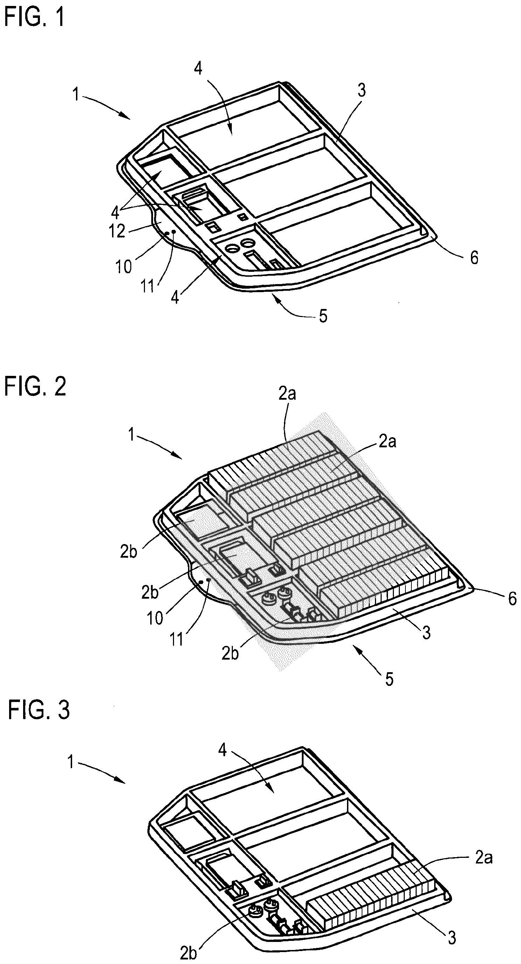

Fig. 1 zeigt eine Aufnahmevorrichtung 1 gemäß einer beispielhaften Ausführungsform der Erfindung. Die Aufnahmevorrichtung 1 dient der Aufnahme unterschiedlicher Energiespeicherkomponenten 2 (vgl. Fig. 2). Bei den Energiespeicherkomponenten 2 handelt es sich insbesondere um Energiespeicherzellen 2a sowie elektronische Komponenten 2b, wie z. B. eine den Lade- und Entladebetrieb der Energiespeicherzellen 2a steuernde Lade- bzw. Steuerungselektronik. Sämtliche Energiespeicherkomponenten 2 bilden einen elektrischen Energiespeicher bzw. eine Batterie. Die Aufnahmevorrichtung 1 kann als Gehäuse für den Energiespeicher aufgefasst werden. Die Aufnahmevorrichtung 1 wird typischerweise in einem Kraftfahrzeug verbaut. Die innerhalb der Aufnahmevorrichtung 1 aufgenommenen Energiespeicherkomponenten 2, d. h. insbesondere der durch diese gebildete Energiespeicher, dient der Versorgung kraftfahrzeugseitiger elektrischer Hochvolt- und/oder Niedervoltverbraucher mit elektrischer Energie.

Die Aufnahmevorrichtung 1 umfasst ein rahmenartiges Aufnahmeteil 3. Bei dem Aufnahmeteil 3 handelt es sich um ein mechanisch hochstabiles metallisches Druckgussteil, d. h. z. B. ein Aluminium-Druckgussteil. Aufgrund der rahmenartigen Gestalt des Aufnahmeteils 3 kann dieses als Tragstruktur für die in diesem aufzunehmenden Energiespeicherkomponenten 2 aufgefasst werden (vgl. Fig. 2, 3). Die rahmenartige Gestalt des Aufnahmeteils 3 ergibt sich durch entsprechende, in dem Aufnahmeteil 3 gebildete Aufnahmeabteile 4. Die jeweils als vertikale Durchbrechung der sich horizontal erstreckenden Grundebene des Aufnahmeteils 3 gebildeten Aufnahmeabteile 4 dienen jeweils der passgenauen, gegebenenfalls sogar formschlüssigen, Aufnahme einer oder mehrerer bestimmter Energiespeicherkomponenten 2, d. h. insbesondere wenigstens einer Energiespeicherzelle 2a und/oder wenigstens einer elektronischen Komponente 2b. Mithin sind die Abmessungen der jeweiligen Aufnahmeabteile 4 an die Abmessungen von jeweiligen in diesen aufzunehmenden Energiespeicherkomponenten 2 angepasst. Die in den Fig. 1, 2 rechts einer Mitteltraverse liegenden, im Vergleich größeren Aufnahmeabteile 4 dienen der Aufnahme von Energiespeicherzellen 2a, die in den Fig. 1, 2 links der Mitteltraverse liegenden, im Vergleich kleineren Aufnahmeabteile 4 dienen der Aufnahme elektronischer Komponenten 2b.

Die Anordnung entsprechender Energiespeicherkomponenten 2 innerhalb der Aufnahmeabteile 4 und somit die Bestückung des Aufnahmeteils 3 und somit der Aufnahmevorrichtung 1 mit entsprechenden Energiespeicherkomponenten 2 ist in Fig. 2 gezeigt. Aus Fig. 2 ergibt sich ferner, dass die Anordnung der Aufnahmeabteile 4 derart gewählt ist, dass sämtliche in den Aufnahmeabteilen 4 anzuordnenden Energiespeicherkomponenten 2, welche betriebsbedingt einen Kühlbedarf haben, bodenseitig unmittelbar auf einer Kühleinrichtung 5 aufliegen. Das Aufnahmeteil 3 ist sonach unmittelbar mit einer an dieses angrenzend angeordneten Kühleinrichtung 5 zur Kühlung der in den Aufnahmeabteilen 4 aufzunehmenden oder aufgenommenen Energiespeicherkomponenten 2 verbunden ist.

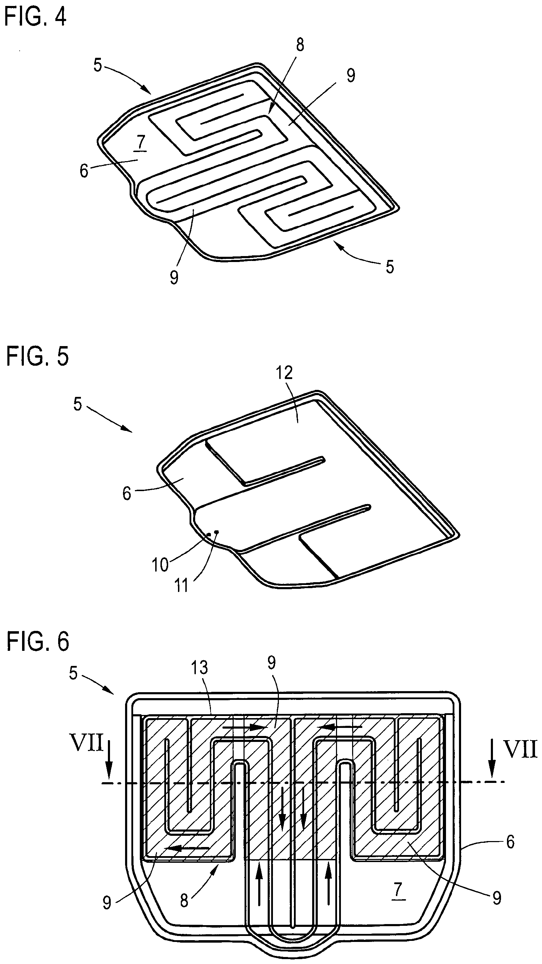

Die Kühleinrichtung 5 ist in ein in den Fig. 4 - 7 näher gezeigtes, weiteres Aufnahmeteil 6 integriert. Ersichtlich bildet das weitere Aufnahmeteil 6 eine Bodenfläche der Aufnahmevorrichtung 1, wohingegen das Aufnahmeteil 3 Seitenflächen der Aufnahmevorrichtung 1 bildet.

Das weitere Aufnahmeteil 6 weist eine wannenartige Gestalt mit einer Grundfläche 7 und von der Grundfläche 7 lotrecht abragenden Rändern auf. Derart ist in dem weiteren Aufnahmeteil 6 ebenso ein Teil des der Aufnahmevorrichtung 1 zugehörigen Aufnahmeraums zur Aufnahme entsprechender Energiespeicherkomponenten 2 gebildet. Das weitere Aufnahmeteil 6 begrenzt den Aufnahmeraum der Aufnahmevorrichtung 1 daher abschnittsweise. Bei dem weiteren Aufnahmeteil 6 handelt es sich um ein aus einem mit Verstärkungsfasern, insbesondere Glasfasern, gefüllten thermoplastischen Kunststoffmaterial, wie z. B. PP, über ein Spritzgießverfahren gebildetes Bauteil.

Wie sich insbesondere anhand der Fig. 4 und 6 erkennen lässt, ist in der Oberfläche des weiteren Aufnahmeteils 6, d. h. insbesondere der Oberfläche der Grundfläche 7 des weiteren Aufnahmeteils 6, eine Kühlmittelkanalstruktur 8 gebildet. Die Kühlmittelkanalstruktur 8 umfasst mehrere, durch nut- oder rinnenartige längliche Vertiefungen der Oberfläche gebildete, mäanderartig verlaufende Kühlmittelkanäle 9. Die Ausbildung der Kühlmittelkanalstruktur 8 bzw. der Kühlmittelkanäle 9 kann im Rahmen der Herstellung des weiteren Aufnahmeteils 6 erfolgt sein. Denkbar ist es grundsätzlich auch, die Kühlmittelkanalstruktur 8 bzw. die Kühlmittelkanäle 9 durch materialabtragende Verfahren in die Oberfläche des weiteren Aufnahmeteils 6 einzubringen.

Wie sich im Weiteren ergibt, strömt durch die in der Oberfläche der Grundfläche 7 des weiteren Aufnahmeteils 6 gebildete Kühlmittelkanalstruktur 8 ein Kühlmittel, d. h. z. B. ein Kühlgas oder eine Kühlflüssigkeit, insbesondere Wasser bzw. Gemische aus Wasser und anderen Flüssigkeiten, wie z. B. Glykol. Die Einbringung des Kühlmittels erfolgt über einen in einem von einem mittigen Abschnitt der Grundfläche 7 abgehenden Bereich eines plattenförmigen Abdeckelements 12 angeordneten Kühlmitteleinlass 10. Im Bereich des Kühlmitteleinlasses 10 ist ferner ein Kühlmittelauslass 11 vorgesehen, über welchen das durch die Kühlmittelkanalstruktur 8 geströmte Kühlmittel aus der Kühlmittelkanalstruktur 8 und somit aus dem weiteren Aufnahmeteil 6 austreten kann. Bei dem Kühlmitteleinlass 10 wie auch dem Kühlmittelauslass 11 handelt es sich jeweils um Anschlussstutzen, welche integral mit dem plattenförmigen Abdeckelement 12 ausgeführt sein können. Insgesamt ist daher ein kreislaufartiges Durchströmen der Kühlmittelkanalstruktur 8 mit einem Kühlmittel realisiert, so dass eine hinreichende Kühlung der sich im Betrieb der in der Aufnahmevorrichtung 1 aufgenommenen Energiespeicherkomponenten 2 und somit des durch diese gebildeten Energiespeichers sichergestellt ist.

Die Strömung des durch die Kühlmittelkanäle 9 bzw. durch die Kühlmittelkanalstruktur 8 strömenden Kühlmittels ist anhand von Fig. 6 erkennbar. Das durch den Kühlmitteleinlass 10 in die Kühlmittelkanalstruktur 8 eintretende Kühlmittel teilt sich in zwei separate Kühlmittelkanäle 9 auf. Die gegenläufige Strömung des Kühlmittels innerhalb der Kühlmittelkanalstruktur 8 ist durch jeweilige Pfeile angedeutet.

Die Anordnung des Kühlmitteleinlasses 10 und des Kühlmittelauslasses 11 sowie die symmetrische Anordnung und der Verlauf der Kühlmittelkanäle 9 ist derart gewählt, dass eine homogene Kühlung der zu kühlenden Energiespeicherkomponenten 2 sichergestellt ist. In Fig. 6 sind durch schraffierte Flächen beispielhaft Anordnungsbereiche von in die Aufnahmevorrichtung 1 aufzunehmenden Energiespeicherzellen 2a angedeutet. Durch die anhand der Pfeile erkennbare gegenläufige Strömung des Kühlmittels durch die Kühlmittelkanalstruktur 8 werden die Energiespeicherzellen 2a daher homogen gekühlt. Die in Fig. 6 im Bereich der mittleren schraffierten Fläche angeordneten Energiespeicherzellen 2a werden hälftig mit dem Kühlmittel mit der vergleichsweise niedrigen Eintrittstemperatur und mit Kühlmittel mit der vergleichsweise warmen Austrittstemperatur gekühlt. Für die in Fig. 6 im Bereich der oberen und unteren schraffierten Fläche angeordneten Energiespeicherzellen 2a reduziert sich die Temperaturdifferenz der gegenläufigen Kühlmittelströme, so dass sich im Mittel eine weitgehend homogene Kühlung sämtlicher Energiespeicherzellen 2a realisieren lässt.

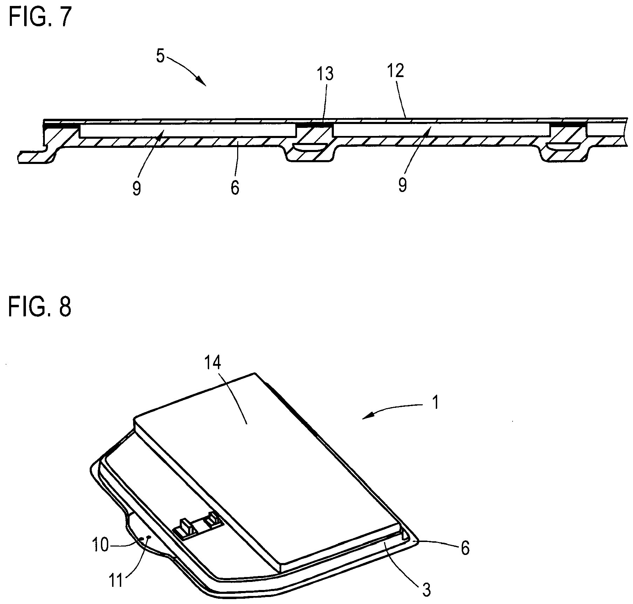

Damit das in den Kühlmittelkanälen 9 und somit durch die Kühlmittelkanalstruktur 8 strömende Kühlmittel nicht innerhalb des weiteren Aufnahmeteils 6 aus den Kühlmittelkanälen 9 respektive der Kühlmittelkanalstruktur 8 austreten und somit in Kontakt mit den zu kühlenden Energiespeicherkomponenten 2 gelangen kann, sind die Kühlmittelkanäle 9 oberseitig über das bereits erwähnte plattenförmige Abdeckelement 12 in Form einer aus einem thermisch gut leitfähigen Metall, wie z. B. Aluminium, gebildeten, metallischen Platte abgedeckt (vgl. Fig. 2, 7). Das Abdeckelement 12 ist z. B. über eine Klebeverbindung (vgl. Fig. 7, Klebebereiche 13) fest mit der Grundfläche 7 des weiteren Aufnahmeteils 6 verbunden. Anhand der Fig. 1, 2, ist ersichtlich, dass über das Abdeckelement 12 eine Wärmeabgabe von den in dem Aufnahmeteil 3 aufgenommenen Energiespeicherkomponenten 2 auf das in der Kühlmittelkanalstruktur 8 respektive den dieser zugehörigen Kühlmittelkanälen 7 strömende Kühlmittel möglich ist.

Anhand von Fig. 8 ist ersichtlich, dass durch die Anordnung eines Verschlussteils 14 auf die in Fig. 2 gezeigte Aufnahmevorrichtung 1 eine vollkommene Abdeckung und somit Umschließung der innerhalb des Aufnahmeraums respektive den Aufnahmeabteilen 4 angeordneten Energiespeicherkomponenten 2 möglich ist. Die innerhalb der Aufnahmevorrichtung 1 aufgenommenen Energiespeicherkomponenten 2 respektive der durch diese gebildete elektrische Energiespeicher ist somit nach Außen hin, d. h. gegenüber äußeren, insbesondere mechanischen und korrosiven, Einflüssen vollkommen abgedichtet und geschützt.

Die Verbindung des Aufnahmeteils 3, des weiteren Aufnahmeteils 6 sowie des Verschlussteils 14 erfolgt über ein Verkleben, so dass eine hinreichende, insbesondere tauchsichere, Abdichtung der in dem innerhalb der Aufnahmevorrichtung 1 gebildeten Aufnahmeraum befindlichen Energiespeicherkomponenten 2 gegeben ist. Die Verklebung erfolgt mit einem Schmelzkleber, welcher über Einbringung von Temperatur, d. h. z. B. mittels eines Heißdrahtes, gelöst werden kann. Derart können Service- oder Reparaturarbeiten z. B. an den Energiespeicherkomponenten 2 durchgeführt werden.

Lediglich im Bereich der elektrische Anschlüsse, d. h. insbesondere einen Hochvoltanschluss und einen Niedervoltanschluss, darstellenden, in Fig. 8 erkennbaren elektronischen Komponenten 2b ist eine Aussparung innerhalb des Verschlussteils 14 vorgesehen, so dass eine ordnungsgemäße elektrisehe Kontaktierung bzw. Verbindung der Energiespeicherkomponenten 2 bzw. des durch diese gebildeten Energiespeichers mit einer entsprechenden Anwendung, d. h. insbesondere einem Kraftfahrzeug respektive entsprechender kraftfahrzeugseitiger elektrischer Verbraucher, möglich ist.

Anhand von Fig. 8 ist ferner ersichtlich, dass der Kühlmitteleinlass 10 und der Kühlmittelauslass 11 in einem separaten, von dem den Aufnahmeraum begrenzenden Bereichen räumlich getrennt angeordneten Bereich des plattenförmigen Abdeckelements 12 angeordnet sind. Der Kühlmitteleinlass 10 und der Kühlmittelauslass 11 liegen daher frei, so dass diese stets gut zugänglich sind.

Anhand der Fig. 1 - 4 und 8 ist erkennbar, dass sich die Aufnahmevorrichtung 1 aus mehreren Bauteilen, d. h. dem Aufnahmeteil 3, dem weiteren Aufnahmeteil 6 sowie einem Verschlussteil 14 baukastenartig zusammensetzen lässt.

Wesentliche Vorteile der in den Fig. gezeigten Aufnahmevorrichtung 1 sind darin zu sehen, dass diese durch ihre mechanische Stabilität auch in mechanisch beanspruchten Bereichen eines Kraftfahrzeugs, wie z. B. im Bereich des Unterbodens, angeordnet bzw. verbaut werden kann. Durch die unmittelbare Verbindung des Aufnahmeteils 3 mit der in das weitere Aufnahmeteil 6 integrierten Kühlmittelkanalstruktur 8 ist eine hinreichende Kühlung sämtlicher Energiespeicherkomponenten 2, insbesondere auch entsprechender elektronischer Komponenten 2b, sichergestellt. Sämtliche elektrischen bzw. elektronischen Anschlüsse wie auch Anschlüsse für die Zu- und Abführung eines Kühlmittels sind Bauraum sparend und gut zugänglich in die Aufnahmevorrichtung 1 integriert.

## Patentansprüche

1. Aufnahmevorrichtung (1) zur Aufnahme wenigstens einer Energiespeicherkomponente (2), umfassend wenigstens ein einen Aufnahmeraum zur Aufnahme der Energiespeicherkomponente (2) zumindest abschnittsweise begrenzendes Aufnahmeteil (3), wobei in dem Aufnahmeteil (3) mehrere Aufnahmeabteile (4) zur passgenauen Aufnahme wenigstens einer Energiespeicherkomponente (2) ausgebildet sind, wobei das Aufnahmeteil (3) mit einer unmittelbar an dieses angrenzend angeordneten Kühleinrichtung (5) zur Kühlung der in wenigstens einem Aufnahmeabteil (4) aufzunehmenden oder aufgenommenen Energiespeicherkomponente (2) verbunden ist,
wobei das Aufnahmeteil (3) eine Seitenfläche der Aufnahmevorrichtung (1) bildet und ein eine Bodenfläche der Aufnahmevorrichtung (1) bildendes weiteres Aufnahmeteil (6) vorgesehen ist, wobei die Kühleinrichtung (5) durch eine in der Oberfläche des weiteren Aufnahmeteils (6) gebildete, wenigstens einen Kühlmittelkanal (9) umfassende Kühlmittelkanalstruktur (8) gebildet ist,
wobei zumindest ein mit der Kühlmittelkanalstruktur (8) kommunizierender Kühlmitteleinlass (10) und ein mit der Kühlmittelkanalstruktur (8) kommunizierender Kühlmittelauslass (11) vorgesehen ist,
wobei die Kühlmittelkanalstruktur (8) durch zumindest ein plattenförmiges Abdeckelement (12) abgedeckt ist,
wobei der Kühlmitteleinlass (10) und der Kühlmittelauslass (11) in einem separaten, von dem den Aufnahmeraum begrenzenden Bereichen räumlich getrennt angeordneten Bereich des plattenförmigen Abdeckelements (12) angeordnet sind.

2. Aufnahmevorrichtung nach Anspruch 1,
**dadurch gekennzeichnet,**
**dass** die Abmessungen der jeweiligen Aufnahmeabteile (4) an die Abmessungen von jeweiligen in diesen aufzunehmenden Energiespeicherkomponenten (2) angepasst sind.

3. Aufnahmevorrichtung nach Anspruch 1 oder 2,
**dadurch gekennzeichnet,**
**dass** das Aufnahmeteil (3) ein metallisches Druckgussteil ist.

4. Aufnahmevorrichtung nach einem der vorangehenden Ansprüche,
**dadurch gekennzeichnet,**
**dass** die Kühlmittelkanalstruktur (8) im Rahmen der Formgebung und/oder eines Materialabtrags des weiteren Aufnahmeteils (6) gebildet ist.

5. Aufnahmevorrichtung nach einem der vorangehenden Ansprüche,
**dadurch gekennzeichnet,**
**dass** das weitere Aufnahmeteil (6) eine wannenartige Gestalt aufweist.

6. Aufnahmevorrichtung nach Anspruch 5,
**dadurch gekennzeichnet,**
**dass** die wannenartige Gestalt durch von einer Grundfläche (7) des weiteren Aufnahmeteils (6) winklig abragende Ränder gebildet ist.

7. Aufnahmevorrichtung nach einem der vorangehenden Ansprüche,
**dadurch gekennzeichnet,**
**dass** das Abdeckelement (12) mit der Oberfläche des weiteren Aufnahmeteils (6) über zumindest einen Verbindungspunkt verbunden ist.

8. Aufnahmevorrichtung nach einem der vorangehenden Ansprüche,
**dadurch gekennzeichnet,**
**dass** die Kühlmittelkanalstruktur (8) zumindest abschnittsweise mäanderartig entlang der Oberfläche des weiteren Aufnahmeteils (6) verlaufend ausgebildet ist.

9. Aufnahmevorrichtung nach einem der vorangehenden Ansprüche,
**dadurch gekennzeichnet,**
**dass** das weitere Aufnahmeteil (6) aus einem Kunststoffmaterial oder Metall gebildet ist.

10. Aufnahmevorrichtung nach einem der vorangehenden Ansprüche,
**gekennzeichnet durch**
ein Verschlussteil (14), über welches der Aufnahmeraum zumindest nach einer offenen Seite hin verschließbar ist.

## Claims

1. Receiving device (1) for receiving at least one energy storage component (2), comprising at least one receiving part (3) which delimits at least in sections a mounting frame for receiving the energy storage component (2), multiple receiving compartments (4) being formed in the receiving part (3) for receiving at least one energy storage component (2) in an exact fit, wherein the receiving part (3) is connected with a cooling device (5) arranged directly adjacent thereto designed to cool the energy storage component (2) to be received in or received in at least one receiving compartment (4),
wherein the receiving part (3) forms a side surface of the receiving device (1) and a further receiving part (6) forming a bottom surface of the receiving device (1) is provided, wherein the cooling device (5) is formed by a coolant channel structure (8), which is formed in the surface of the further receiving part (6) and comprises at least one coolant channel (9),
wherein at least one coolant inlet (10) communicating with the coolant channel structure (8) and one coolant outlet (11) communicating with the coolant channel structure (8) is provided,
wherein the coolant channel structure (8) is covered by at least one plate-shaped cover element (12),
wherein the coolant inlet (10) and the coolant outlet (11) are arranged in a separate region of the plate-shaped cover element (12) which is arranged spatially separate from the regions which delimit the mounting frame

2. Receiving device according to claim 1,
**characterised in that**
the dimensions of the respective receiving compartments (4) are adapted to the dimensions of respective energy storage components (2) to be received in said receiving compartments.

3. Receiving device according to claim 1 or 2,
**characterised in that**
the receiving part (3) is a metallic die cast part.

4. Receiving device according to any of the preceding claims,
**characterised in that**
the coolant channel structure (8) is formed during a shaping part and/or material removing processing of the further receiving part (6).

5. Receiving device according to any of the preceding claims,
**characterised in that**
the further receiving part (6) has a trough-like shape.

6. Receiving device according to claim 5,
**characterised in that**
the trough-like shape is formed by edges that protrude at an angle from a base surface (7) of the further receiving part (6).

7. Receiving device according to any of the preceding claims,
**characterised in that**
the cover element (12) is connected to the surface of the further receiving part (6) via at least one connection point.

8. Receiving device according to any of the preceding claims,
**characterised in that**
the coolant channel structure (8) is designed so as to extend in a meandering manner at least in sections along the surface of the further receiving part (6).

9. Receiving device according to any of the preceding claims,
**characterised in that**
the further receiving part (6) is made from a plastic material or metal.

10. Receiving device according to any of the preceding claims,
**characterised by**
a closure part (14) by means of which the mounting frame can be closed at least towards one open side.

## Revendications

1. Dispositif de logement (1) destiné à loger au moins un composant accumulateur d'énergie (2), comprenant au moins une partie de logement (3) délimitant au moins par section un espace de logement destiné à loger le composant accumulateur d'énergie (2), dans lequel plusieurs compartiments de logement (4) destinés à loger de façon précisément ajustée au moins un composant accumulateur d'énergie (2) sont réalisés dans la partie de logement (3), dans lequel la partie de logement (3) est reliée à un dispositif de refroidissement (5) agencé de manière directement adjacente à celle-ci pour le refroidissement du composant accumulateur d'énergie (2) logé ou à loger dans au moins un compartiment de logement (4),
dans lequel la partie de logement (3) forme une surface latérale du dispositif de logement (1) et une autre partie de logement (6) formant une surface de fond du dispositif de logement (1) est prévue, dans lequel le dispositif de refroidissement (5) est formé par une structure de canal de moyen de refroidissement (8) comprenant au moins un canal de moyen de refroidissement (9), formée dans la surface de l'autre partie de logement (6),
dans lequel au moins une entrée de moyen de refroidissement (10) communiquant avec la structure de canal de moyen de refroidissement (8) et une sortie de moyen de refroidissement (11) communiquant avec la structure de canal de moyen de refroidissement (8) est prévue,
dans lequel la structure de canal de moyen de refroidissement (8) est recouverte par au moins un élément de recouvrement en forme de plaque (12),
dans lequel l'entrée de moyen de refroidissement (10) et la sortie de moyen de refroidissement (11) sont agencées dans une zone de l'élément de recouvrement en forme de plaque (12) séparée, agencée séparément dans l'espace des zones délimitant l'espace de logement.

2. Dispositif de logement selon la revendication 1,
**caractérisé en ce**
**que** les dimensions des compartiments de logement (4) respectifs sont adaptées aux dimensions de composants accumulateurs d'énergie (2) respectifs à loger dans ceux-ci.

3. Dispositif de logement selon la revendication 1 ou 2,
**caractérisé en ce**
**que** la partie de logement (3) est une partie moulée par injection métallique

4. Dispositif de logement selon l'une quelconque des revendications précédentes,
**caractérisé en ce**
**que** la structure de canal de moyen de refroidissement (8) est formée dans le cadre de la mise en forme et/ou d'un enlèvement de matériau de l'autre partie de logement (6).

5. Dispositif de logement selon l'une quelconque des revendications précédentes,
**caractérisé en ce**
**que** l'autre partie de logement (6) présente une forme de type cuvette.

6. Dispositif de logement selon la revendication 5,
**caractérisé en ce**
**que** la forme de type cuvette est formée par des bords faisant saillie de manière angulaire d'une surface de base (7) de l'autre partie de logement (6).

7. Dispositif de logement selon l'une quelconque des revendications précédentes,
**caractérisé en ce**
**que** l'élément de recouvrement (12) est relié à la surface de l'autre partie de logement (6) par l'intermédiaire d'au moins un point de liaison.

8. Dispositif de logement selon l'une quelconque des revendications précédentes,
**caractérisé en ce**
**que** la structure de canal de moyen de refroidissement (8) est réalisée s'étendant au moins par section de façon sinueuse le long de la surface de l'autre partie de logement (6).

9. Dispositif de logement selon l'une quelconque des revendications précédentes,
**caractérisé en ce**
**que** l'autre partie de logement (6) est formée en un matériau plastique ou métal.

10. Dispositif de logement selon l'une quelconque des revendications précédentes,
**caractérisé par**
une partie de fermeture (14), par l'intermédiaire de laquelle l'espace de logement peut être fermé au moins vis-à-vis d'un côté ouvert.
